# EUROPEAN PATENT SPECIFICATION

(11) **EP 1 919 327 B1**
(45) Date of publication and mention of the grant of the patent: **08.04.2009**
(21) Application number: 06764989.7
(22) Date of filing: 17.07.2006
(51) Int. Cl.: A47C 19/00, A61G 7/00

(54) **BED CASTOR AND BRAKE ASSEMBLY**
LAUFROLLEN- UND BREMSANORDNUNG FÜR EIN BETT
ROULETTE DE LIT ET ENSEMBLE DE FREIN

(30) Priority: 20.07.2005 GB 0514926; 14.11.2005 GB 0523170
(43) Date of publication of application: 14.05.2008
(73) Proprietor: Huntleigh Technology Limited, Luton Bedfordshire LU1 1TD (GB)
(72) Inventor: HAYES, Stephen 46 Wallows Wood, Dudley DY3 3AF West Midlands (GB); HOLLYOAK, Stephen, West Midlands DY6 8SJ (GB)
(74) Representative: Thaker, Shalini
(86) International application number: PCT/GB2006/002647
(87) International publication number: WO 2007/010229

(56) References cited:
- US-A- 5 634 532
- US-A1- 2001 011 393
- US-A1- 2004 200 646
- US-B1- 6 321 878

## Description

The present invention relates to a bed castor and brake assembly for a bed, in particular a hospital bed.

As it is often necessary to move hospital beds around a ward and also around a care home, such beds are typically provided with castors. Of course, a wheeled bed must be provided with a braking system to ensure that the bed can be set in one position. Many known hospital beds are provided with castors having integral brake mechanisms. A known castor of this type is provided with a cam coupled to a brake pad, the cam being rotatable to engage the brake pad with or to disengage the brake pad from a wheel of the castor. The cam and brake pad are typically provided internally of a connecting shaft of the castor.

As all four corners of such beds are typically provided with castors, it is not sufficient to brake a single castor. In practice, it is a requirement for all four castors to be braked. Of course, engaging the brake on all four castors separately can be difficult and systems have therefore been developed to link the braking systems of the castors together. Such systems are, however, complex in design. One example of such a system is US6321878.

The braking systems for such beds are typically provided with one or more pedals. As will be appreciated, such pedals are much used and often used hard, particularly in a hospital environment. It is not uncommon for the pedals to break or for components to come loose. This compromises the usability of the devices and often the safety and efficiency of the braking system.

The present invention seeks to provide an improved brake pedal or improved castor and brake assembly and an improved hospital bed.

According to an aspect of the present invention, there is provided a pedal for a brake assembly of a bed, as claimed in claim 1.

Prior art pedals have provided fittings for only the brake components, any coupling to other brake mechanisms being provided by non-integral fittings. This complicates the brake assembly by requiring additional components and by increasing the chances of failure and possible locations for collection of dirt and germs.

Preferably, the brake fitting and the coupling member fitting are spaced from one another on the pedal. This provides for the pedal to exhibit both a rotating and a cam action for the two fittings.

Preferably, the pedal is made from a plastics material.

In the preferred embodiment, the pedal includes at least one marker, the or each marker being over moulded on the pedal during moulding thereof. The feature of over moulding markers has the advantage of providing a much stronger coupling of markers to the pedal than is possible with glue and the like, as is used in prior art are devices. This can be particularly important where the markers are intended to indicate brake engaged and brake disengaged conditions.

It is preferred that all markers and labels provided on the bed are over moulded to the part to which they are attached.

According to another aspect of the present invention, there is provided a brake assembly for a bed including a plurality of pedal members as specified herein, at least one coupling member fittable to at least two adjacent pedals and operable to transfer to one pedal a motion corresponding to a motion imparted to the other or another pedal, and a brake mechanism coupled to the brake fittings of the pedals.

Advantageously, the assembly provides at least four pedals, arranged in opposing and side-by-side manner, pedals lying side-by-side being coupled together by said coupling members and pedals in opposing relationship being coupled together by a common brake actuator. In this arrangement, all the pedals can be coupled to one another, such that actuation of a single pedal will move all the interconnected pedals.

Preferably, the assembly includes a castor associated with each pedal, each castor including a brake pad coupled to the brake actuator.

According to another aspect of the present invention, there is provided a frame assembly for a bed including a brake assembly as herein specified, the frame assembly including a frame including fittings for receiving a plurality of castors and fittings for holding a plurality of pedals, at least one hollow strut member of the frame being provided for coupling opposing pedals such that the common brake actuator can pass though the hollow strut.

It is preferred that the or each coupling member for coupling together pedals lying in side-by-side manner is provided outside the frame struts, preferably disposed alongside an associated strut. This arrangement, it has been found, is advantageous in allowing a simpler structure and allowing a greater range of movement of the connecting member than would be possible with a connecting member located within a hollow strut of the frame.

According to another aspect of the present invention, there is provided a bed including a frame assembly as herein specified.

Embodiments of the present invention are described below, by way of example only, with reference to the accompanying drawings, in which:
Figure 1 is a perspective view in exploded form of an embodiment of pedal and showing part of an embodiment of connecting member;
Figure 2 is a perspective view in exploded form of the pedal of Figure 1, from the other side, and showing part of a brake actuator frame assembly;
Figure 3 is a perspective view in exploded form of an embodiment of pedal, brake and castor assembly; and
Figure 4 is a perspective view in exploded form of an embodiment of bed frame assembly including a plurality of the pedal, brake and castor assemblies of Figure 3.

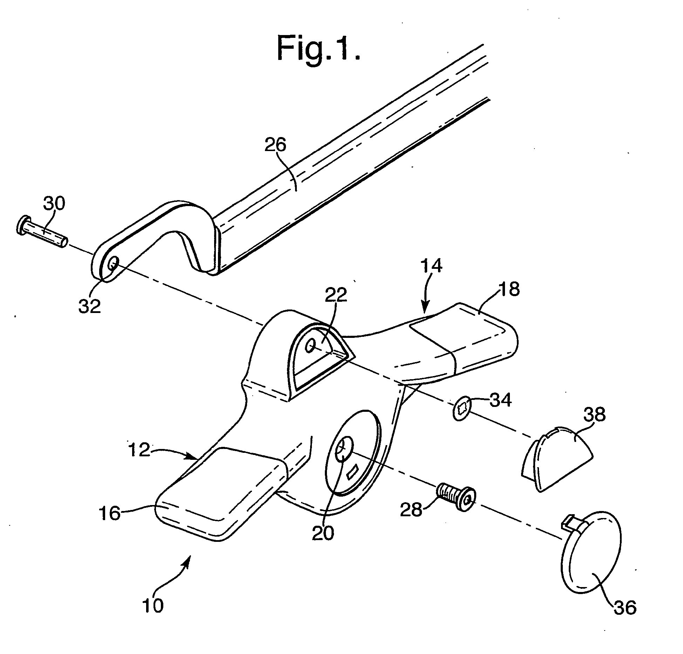

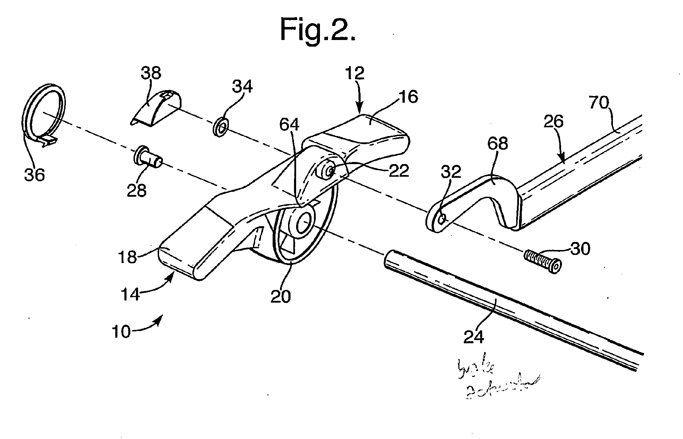

Referring to Figures 1 and 2, an embodiment of pedal 10 for a bed brake assembly is shown. The pedal 10 is preferably formed from a single moulding of a suitably strong plastics material and includes first and second arms 12, 14, each provided in this embodiment with a marker 16, 18. The markers 16, 18 are in this example coloured covers, one in red and the other in green, to denote states of brake applied and brake released. These marker types are in common use in the industry. In this embodiment, the markers 16, 18 are over moulded on the pedal 10, thereby forming in practice a single unitary structure. This structure has much greater longevity and strength than those which have markers which are, for example, glued onto the pedal or fitted by some form of snap or interference fit.

The pedal 10 is provided with two fittings 20, 22 for coupling with a brake actuator 24 and a coupling member 26 respectively. In this embodiment, the brake actuator 24 is of a type commonly used in the art, being a rod with a hexagonal transverse cross-section. The fitting 20 in the preferred embodiment provides a hexagonal bore into which the actuator 24 is a tight fit. The fitting 20 also provides an aperture to the front side of the pedal (as seen in Figure 1) to allow the passage of a bolt 28 whose threaded shank engages a corresponding threaded bore (not shown) in the end of the actuator 24. The bolt 28 secures the pedal 10 in place.

The second fitting 22 of the pedal 10 is located above the first fitting 20 and in a line with the first fitting 20 which is substantially perpendicular to the line made by the two arms 12, 14. The second fitting 22 provides an aperture through which a fixing rod 30 can pass, the fixing rod 30 also passing through an aperture 32 in the coupling member 26 and mating with a spring clip 34 so as to fix the coupling member to the pedal 10 at the position of the second fitting 22.

First and second caps 36, 38 snap fit onto the pedal 10 to cover the front side of the fittings 20, 22.

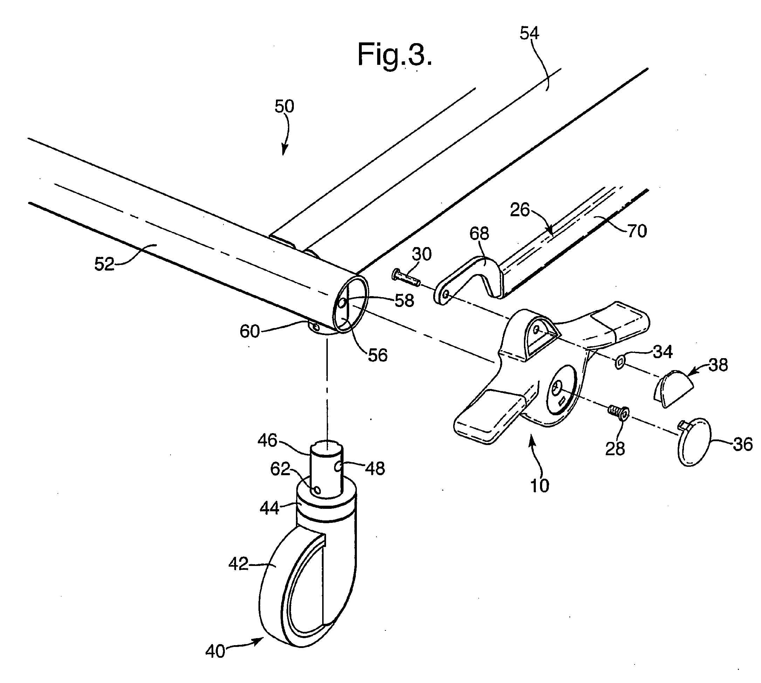

Referring now to Figure 3, there is shown a preferred embodiment of pedal, brake and castor assembly. A castor 40, of known form, includes a wheel 42, which can rotate about a bushing 44, and a coupling shaft 46. Within the shaft 46 there is provided a cam mechanism and brake pad (both not shown). The brake pad in use can be urged by the cam onto the wheel 42 to stop it moving and can also be released therefrom by opposite rotation of the cam. First and second opposing round apertures 48 (only one of which is seen in Figure 3) are provided in the shaft 46 and in use receive the actuator rod 24, as is described in further detail below. As is well known, the cam includes an appropriate fitting to receive the actuator rod 24 and in use rotates with rotation of the rod 24 to carry out the cam action which applies or releases the brake pad from engagement with the wheel 42. As this design of castor with integral brake mechanism is well known in the art, it is not described in any further detail herein.

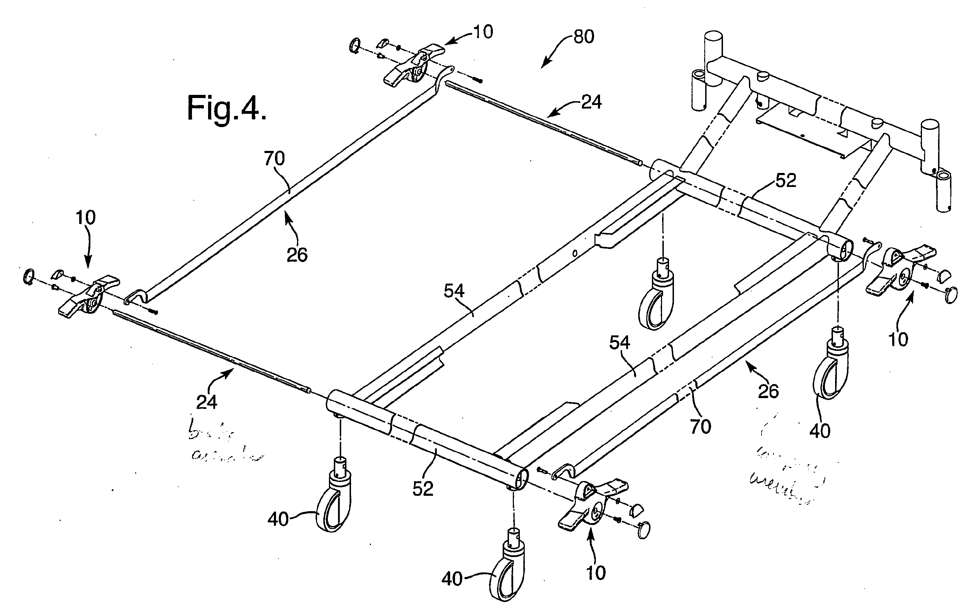

Figure 3 also shows a part of a bed frame 50 to which the castor, brake and pedal assembly are fitted. The frame includes a first transverse strut 52 integral with a first longitudinal strut 54. There are typically provided two transverse and two longitudinal struts as shown in Figure 4. Of course, the struts 52, 54 can be either longitudinal or transverse, which one each is not being important.

The strut 52 is hollow and is provided with a cylindrical fitting 56 opening downwardly. The fitting 56 receives the shaft 46 of the castor 40 and is provided with two opposing round apertures 58 which in use align with the apertures 48 in the castor shaft 46 to allow the actuator rod 24 to pass therethrough and to rotate therein. The cylindrical fitting 56 also includes a hole 60 which aligns with a hole 62 in the castor shaft 46 for receipt of a fixing screw or bolt (not shown).

The pedal 10 fits onto the end of hollow strut 52, such that the rounded internal shoulder 64 (best seen in Figure 1) overlies the strut 56 and provides for guided rotation of the pedal 10 about the strut 52. The second fitting 22 of the pedal thus also overlies the strut 52, as does the end of the coupling element 26. As will be apparent from Figure 3 in particular, the coupling element 26 includes a bent bracket element 70 and a straight elongate portion 70 extending from the bracket. This allows the coupling element 26 to run alongside the strut 54, substantially aligned therewith.

The first fitting 20 is substantially aligned with the centreline of the strut 52 such that depression of one of the arms 12, 14 of the pedal 10 will cause only rotation of the brake actuator rod 24. On the other hand, such rotation will cause the second fixing 22 to move around an arc determined by the distance of the second fitting 22 from the first fitting 20, that is of the radius as measured from the centre point set by the fitting 20. This arcuate movement of the fitting 22 causes a similar movement in the coupling rod 26 which, by virtue of the length of the coupling rod, equates substantially to a lateral translation of the element 26.

Figure 4 shows an example of a base frame 80 for a bed, in particular a hospital bed.. The frame 80 includes longitudinal and transverse struts 52, 54, as per Figure 3, arranged in a rectangular form, with four castors 40 and four associated pedal assemblies 10. Two actuator rods 24 are provided, one for each pair of opposing pedal assemblies 10, while two connecting elements 26 are provided, one for each pair of side-by-side pedal assemblies 10.

When assembled, all the pedals and thus all the brake mechanisms are coupled to one another through the two actuator rods 24 and two coupling elements 26. When one pedal 10 is turned, by depression of the appropriate arm 12, 14, this causes rotation of the actuator rod 24 fitted thereto which in turn rotates the opposite pedal 10. The rotation of the first pedal 10 also causes, through the translatory movement of the connecting element 26, an equivalent rotation of the pedal lying to the side and thus, through the entire interconnected assembly, similar rotation of all the pedals 10. As the rotation of one pedal 10 will either engage or disengage its associated castor brake in dependence upon the direction of rotation, through its actuator shaft 24, all the castors will either be locked or will all be released by this single operation.

## Claims

1. A pedal (10) for a brake assembly of a bed, the pedal including first and second arms (12, 14) to activate the brake and to release the brake respectively **characterised in that** the pedal is a moulded component provided with an integral fitting (20) for a brake component and an integral fitting (22) for a coupling member for coupling different brake mechanisms together.

2. A pedal according to claim 1, **characterised in that** the brake fitting and the coupling member fitting are spaced from one another on the pedal.

3. A pedal according to claim 1, **characterised in that** the pedal includes at least one marker (16, 18), the or each marker being over moulded on the pedal.

4. A brake assembly for a bed including a plurality of pedals according to any preceding claim, **characterised in that** at least one coupling member is fittable to at least two adjacent pedals and operable to transfer to one pedal a motion corresponding to a motion imparted to the other or another pedal, and a brake mechanism is able to be coupled to the brake fittings of the pedals.

5. A brake assembly according to claim 4, including at least four pedals, arranged in opposing and side-by-side manner, pedals lying side-by-side being coupled together by said coupling members and pedals in opposing relationship being coupled together by a common brake actuator (24).

6. A brake assembly according to claim 4 or 5, including a castor (40) associated with each pedal, each castor including a brake pad coupled to the brake actuator.

7. A frame assembly for a bed including a brake assembly according to any one of claims 4 to 6 and a frame including fittings for receiving a plurality of castors and fittings for holding a plurality of pedals, at least one hollow strut member (52) of the frame being provided coupling opposing pedals such that the common brake actuator can pass though the hollow strut.

8. A frame assembly according to claim 7, **characterised in that** the or each coupling member for coupling together pedals lying in side-by-side manner is provided outside the frame struts, preferably disposed alongside an associated strut.

9. A bed including a frame assembly according to claim 7 or 8.

## Patentansprüche

1. Pedal (10) für eine Bremsanordnung eines Bettes, wobei das Pedal erste und zweite Arme (12, 14) aufweist, um die Bremse zu aktivieren beziehungsweise frei zugeben, **dadurch gekennzeichnet, dass** das Pedal ein Formbauteil ist, das mit einer integralen Passung (20) für eine Bremskomponente und einer integralen Passung (22) für ein Kopplungselement zum Zusammenkuppeln unterschiedlicher Bremsmechanismen versehen ist.

2. Pedal nach Anspruch 1, **dadurch gekennzeichnet, dass** die Bremspassung und die Kopplungselementpassung an dem Pedal von einander beabstandet sind.

3. Pedal nach Anspruch 1, **dadurch gekennzeichnet, dass** das Pedal wenigstens eine Markierung (16, 18) aufweist, wobei die oder jede Markierung an dem Pedal überformt ist.

4. Bremsanordnung für ein Bett mit einer Anzahl von Pedalen gemäß einem der vorstehenden Ansprüche, **dadurch gekennzeichnet, dass** wenigstens ein Kopplungselement auf wenigstens zwei benachbarte Pedale montierbar ist und betätigbar ist, um auf das eine Pedal eine Bewegung entsprechend einer Bewegung, mit der das andere oder ein anderes Pedal beaufschlagt ist, zu übertragen, und ein Bremsmechanismus in der Lage ist, an die Bremspassungen der Pedale gekoppelt zu werden.

5. Bremsanordnung nach Anspruch 4, mit wenigstens vier Pedalen, die einander gegenüber liegend und nebeneinander angeordnet sind, wobei die nebeneinander liegenden Pedale durch die Kopplungselemente zusammengekoppelt sind und einander gegenüberliegende Pedale durch ein gemeinsames Bremsbetätigungselement (24) zusammengekoppelt sind.

6. Bremsanordnung nach Anspruch 4 oder 5, mit einer Laufrolle (40), die jedem Pedal zugeordnet ist, wobei jede Laufrolle ein Bremskissen aufweist, das an das Bremsbetätigungselement gekoppelt ist.

7. Rahmenbaugruppe für ein Bett mit einer Bremsanordnung gemäß einem der Ansprüche 4 bis 6 und einem Rahmen, der Passungen zur Aufnahme einer Anzahl von Laufrollen und Passungen zum Halten einer Anzahl von Pedale aufweist, wobei wenigstens eine Hohlstrebe (52) des Rahmens vorgesehen ist, die einander gegenüber liegende Pedale koppelt, so dass das gemeinsame Bremsbetätigungselement durch die Hohlstrebe hindurch gehen kann.

8. Rahmenbaugruppe nach Anspruch 7, **dadurch gekennzeichnet, dass** das oder jedes Kopplungselement zum Zusammenkuppeln nebeneinander liegender Pedale außerhalb der Rahmenstreben vorgesehen ist, vorzugsweise entlang einer zugehörigen Strebe angeordnet ist.

9. Bett mit einer Rahmenbaugruppe gemäß Anspruch 7 oder 8.

## Revendications

1. Pédale (10) pour un ensemble de freins d'un lit, la pédale comprenant des premier et second bras (12, 14) pour activer le frein et pour libérer le frein, respectivement, **caractérisée en ce que** la pédale est une pièce moulée pourvue d'une monture intégrée (20) pour une pièce de frein et d'une monture intégrée (22) pour un élément d'accouplement pour accoupler ensemble différents mécanismes de freins.

2. Pédale selon la revendication 1, **caractérisée en ce que** la monture de frein et la monture d'élément d'accouplement sont espacées l'une de l'autre sur la pédale.

3. Pédale selon la revendication 1, **caractérisée en ce que** la pédale comprend au moins un repère (16, 18), le ou chaque repère étant surmoulé sur la pédale.

4. Ensemble de freins pour un lit comprenant plusieurs pédales selon l'une quelconque des revendications précédentes, **caractérisé en ce qu'**au moins un élément d'accouplement peut être monté sur au moins deux pédales adjacentes et peut être mis en oeuvre pour transférer à une pédale un mouvement correspondant à un mouvement communiqué à l'autre ou à une autre pédale, et un mécanisme de frein peut être accouplé aux montures de frein de la pédale.

5. Ensemble de freins selon la revendication 4, comprenant au moins quatre pédales agencées d'une manière opposée et côte-à-côte, des pédales s'étendant côte-à-côte étant accouplées entre elles par lesdits éléments d'accouplement et des pédales dans une disposition opposée étant accouplées entre elles par un actionneur de frein commun (24).

6. Ensemble de freins selon la revendication 4 ou 5, comprenant une roulette (40) associée à chaque pédale, chaque roulette comprenant un patin de frein accouplé à l'actionneur de frein.

7. Ensemble à châssis pour un lit comprenant un ensemble de freins selon l'une quelconque des revendications 4 à 6 et un châssis comprenant des montures destinées à recevoir plusieurs roulettes et des montures destinées à maintenir plusieurs pédales, au moins un élément creux (52) d'entretoisement du châssis étant prévu, accouplant les pédales opposées de façon que l'actionneur de frein commun puisse passer dans l'entretoise creuse.

8. Ensemble à châssis selon la revendication 7, **caractérisé en ce que** le ou chaque élément d'accouplement destiné à accoupler entre elles des pédales s'étendant côte-à-côte est prévu à l'extérieur des entretoises de châssis, de préférence disposé le long d'une entretoise associée.

9. Lit comprenant un ensemble à châssis selon la revendication 7 ou 8.
